Europäisches Patentamt

European Patent Office

Office européen des brevets

(11) Veröffentlichungsnummer: **0 091 513**

A2

## (12) EUROPÄISCHE PATENTANMELDUNG

(21) Anmeldenummer: **82110753.9**

(22) Anmeldetag: **20.11.82**

(51) Int. Cl.³: **H 04 M 1/10**
**H 04 M 1/65**

(30) Priorität: **10.04.82 DE 3213379**

(43) Veröffentlichungstag der Anmeldung:
**19.10.83 Patentblatt 83/42**

(84) Benannte Vertragsstaaten:
**AT BE CH DE FR GB LI LU**

(71) Anmelder: **GRUNDIG E.M.V. Elektro-Mechanische Versuchsanstalt Max Grundig & Co KG Kurgartenstrasse 37 D-8510 Fürth(DE)**

(72) Erfinder: **Emmert, Reinhold Reiherstrasse 15 D-8510 Fuerth(DE)**

(72) Erfinder: **Kühnlein, Dieter Am Nussgraben 17 D-8501 Tuchenbach(DE)**

(54) **Lautsprech-Telefongerät.**

(57) Die Erfindung betrifft ein Lautsprech-Telefongerät, das als Untersetzer einer induktiv oder galvanisch angekoppelten Fernsprech-Tischstation dient und mit einem Magnetband-Aufnahme-Wiedergabegerät in einem L-förmigen Gehäuse zu einer Baueinheit zusammengefaßt ist.

FIG. 3

EP 0 091 513 A2

– 1 –

# LAUTSPRECH-TELEFONGERÄT

## BESCHREIBUNG

Die Erfindung betrifft ein Lautsprech-Telefongerät, das als Untersetzer einer induktiv oder galvanisch angekoppelten Fernsprech-Tischstation dient.

Es sind Lautsprech-Telefongeräte bekannt, die als getrennte Geräte an eine Fernsprech-Tischstation elektrisch anschließbar sind, und somit das Mithören eines Telefongesprächs über einen frei abstrahlenden Lautsprecher ermöglichen. Auch sind Lautsprecheinrichtungen dieser Art bekannt, die unmittelbar in die Fernsprech-Tischstation eingebaut sind und durch Tastendruck ein- bzw. ausgeschaltet werden. Weiterhin gibt es Telefonadapter, die es ermöglichen, ein Magnetband-Aufnahme-Wiedergabegerät an einen Fernsprechapparat anzuschließen, um ankommende Gespräche aufzuzeichnen und speichern zu können. Weiterhin sind Geräte in Form eines Telefon-Anrufbeantworters bekannt, die über einen eingebauten Lautsprecher das Mithören eines ankommenden Gesprächs gestatten.

Um nun an einem Telefonapparat ankommende Gespräche laut und frei hören und bedarfsweise gleichzeitig aufzeichnen zu können, war es bisher erforderlich, mehrere einzelne Geräte zu kombinieren oder ein aufwendiges für einen nicht gewünschten Anwendungsfall (Telefon-Anrufbeantworter) vorgesehenes Gerät zu verwenden.

Die Verwendung von mehreren Geräten in einer kombinierten Anschaltung an eine Fernsprech-Tischstation für obig geschilderten Bedarfsfall ist aufwendig, benötigt viel Platz, ist in der Handhabung (Mehrfachbedienung) nicht einfach und bei der Anschaffung mit erheblichen Kosten verbunden.

Der Erfindung liegt daher die Aufgabe zugrunde, ein Lautsprech-Telefongerät mit der Möglichkeit einer Gesprächsaufzeichnung in einfachster Weise zu schaffen, das als Untersetzer einer Fernsprech-Tischstation dient, einfachst zu bedienen ist und nur einen getrennten Stromanschluß benötigt.

Diese Aufgabe wird bei einem Lautsprech-Telefongerät der im Oberbegriff des Anspruchs 1 definierten Gattung gemäß der Erfindung durch die Merkmale im Kennzeichnungsteil des Anspruchs 1 gelöst.

Die Erfindung wird nachfolgend anhand der Zeichnungen erläutert. Es zeigt:

Fig. 1    eine perspektivische Ansicht eines
Lautsprech-Telefongeräts mit zusätzlichem Magnetband-Aufnahme-
Wiedergabegerät als Untersetzer
einer Fernsprech-Tischstation,

Fig. 2    eine perspektivische Ansicht ähnlich

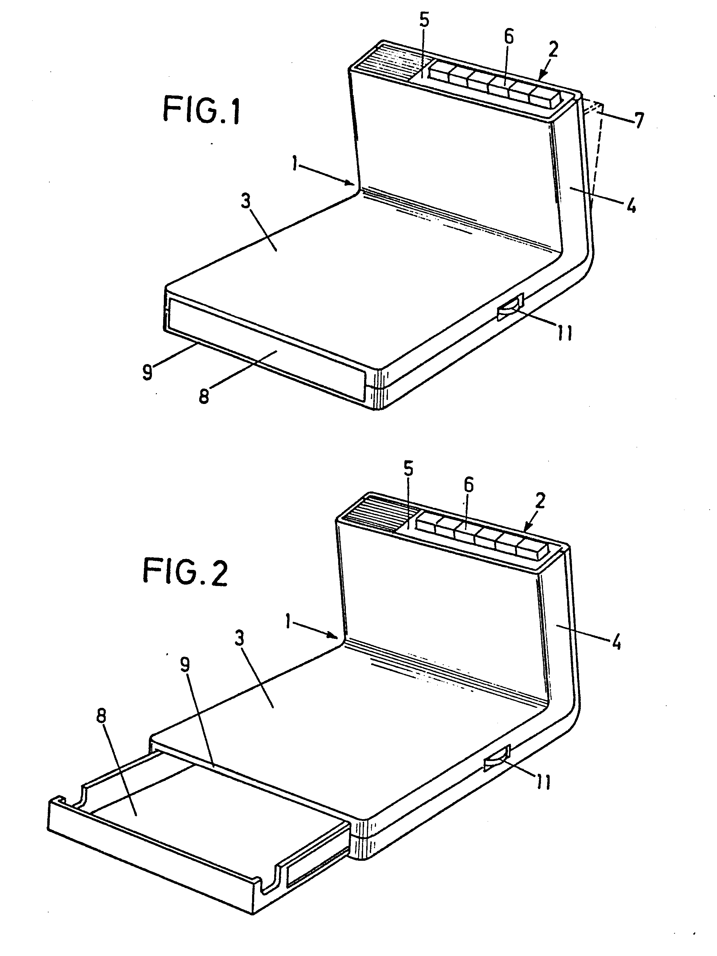

der Fig. 1, jedoch mit einem teilweise aus dem Gerät herausgezogenen
Schiebeteil,

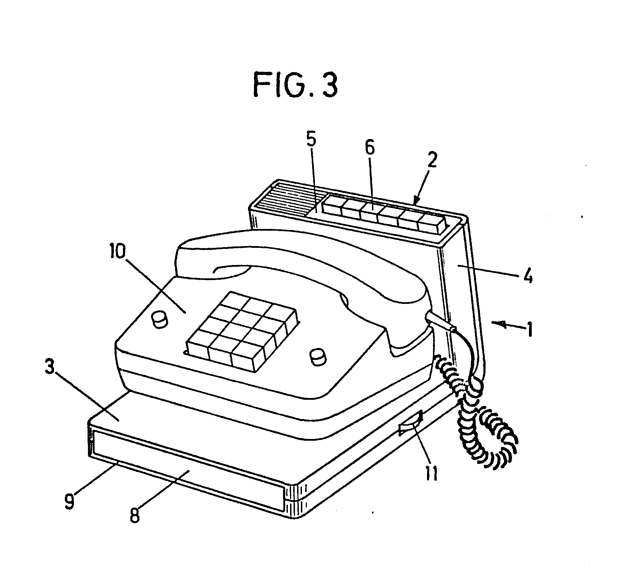

Fig. 3    eine perspektivische Ansicht ähnlich
der Fig. 1 und 2, jedoch mit einer
auf dem als Untersetzer ausgebildeten
Gerät aufgestellten Fernsprech-Tischstation.

In Fig. 1 ist ein Lautsprech-Telefongerät 1 mit eingebautem Magnetband-Aufnahme-Wiedergabegerät 2 dargestellt.
Die zusammengefaßte Geräte-Baueinheit weist eine L-förmige
Gehäuseform auf. Der längere Schenkel des L-förmigen
Gehäuses ist als flaches Gehäuseteil 3 ausgebildet und
ist in seinen Abmessungen als Untersetzer für eine Fernsprech-Tischstation üblicher Baugröße geeignet. Auf dem
flachen Gehäuseteil 3 ist der kurze Schenkel des L-förmigen Gehäuses als dickeres Gehäuseteil 4 senkrecht oder
leicht zur Senkrechten geneigt aufgesetzt. Das dickere
Gehäuseteil 4 beinhaltet das Magnetband-Aufnahme-Wiedergabegerät 2, wobei im gezeigten Beispiel ein Kassetten-Tonbandgerät verwendet ist. Auf der oberen Schmalseite 5 des dickeren Gehäuseteils 4 (kurzer Gehäuseschenkel) sind die Bedienelemente 6 des Kassetten-Tonbandgeräts in Form eines streifenförmigen Drucktastenaggregats angeordnet. Die Bandkassette für das Kassettengerät wird vorzugsweise über eine an der äußeren Wandfläche des dickeren Gehäuseteils angeordnete Klappe 7 in das Gerät 1 eingeschwenkt (die ausgeschwenkte Klappe ist in die Fig. 1 gestrichelt eingezeichnet). Ebenfalls auf der äußeren Wandfläche oder vorzugsweise an der inneren Wandfläche des dickeren Gehäuseteils ist ein Lautsprecher für die Lautsprecheinrichtung des Geräts angeordnet. Der Lautsprecher kann auch neben dem Drucktastenaggregat eingesetzt sein.

Aus der Fig. 2 ist ein Schiebeteil 8 ersichtlich, das im längeren flachen Gehäuseteil 3 untergebracht ist. Durch seine schubladenartige Ausbildung ist das Schiebeteil 8 aus der vorderen Stirnseite 9 herausziehbar und dient vorzugsweise der Aufnahme eines Telefonverzeichnisses. Das im Schiebeteil eingelegte Telefonverzeichnis kann zusätzlich beleuchtbar sein, wobei die Beleuchtung erst beim Herausziehen des Schiebeteils eingeschaltet wird. Ferner ist es denkbar, daß das Schiebeteil einen elektronischen Rechner oder bedarfsweise einen Terminkalender beinhaltet.

Die Fig. 3 zeigt das Lautsprech-Telefongerät 1 mit integriertem Kassetten-Tonbandgerät 2 als Untersetzer mit
einer darauf abgestellten Fernsprech-Tischstation 10.
Das Gerät 1 hat bedarfsweise auch an der schmalen Längsseite des flachen Gehäuseteils ein oder mehrere Bedienungsteile, z.B. einen Lautstärkeregler 11 und/oder einen
Schieber zum Öffnen des Schiebeteils 8. Ferner ist es
möglich, daß weitere Bedienungsteile an der Längsseite
des dickeren Gehäuseteils angebracht sind.

# LAUTSPRECH-TELEFONGERÄT

## PATENTANSPRÜCHE

1. Lautsprech-Telefongerät, das als Untersetzer einer induktiv oder galvanisch angekoppelten Fernsprech-Tischstation dient, d a d u r c h   g e k e n n - z e i c h n e t ,   daß dem Lautsprech-Telefongerät (1) ein Magnetband-Aufnahme-Wiedergabegerät (2) zugeordnet ist, und die beiden Geräte, die der Signalverstärkung zur freien Lautsprecherabstrahlung und/oder Aufzeichnung von Telefongesprächen dienen, als Baueinheit zusammengefaßt sind. ·

2. Lautsprech-Telefongerät nach Anspruch 1, d a d u r c h   g e k e n n z e i c h n e t ,   daß das Aufnahme-Wiedergabegerät (2) als Kassetten-Tonbandgerät ausgebildet ist.

- 2 -

0091513

3. Lautsprech-Telefongerät nach den Ansprüchen 1 und 2, d a d u r c h   g e k e n n z e i c h n e t , daß die Gehäuseform der zusammengefaßten Geräte L-förmig ist, daß der längere Schenkel des L-förmigen Gehäuses als flaches Gehäuseteil (3) ausgebildet ist, und daß der hierauf senkrecht stehende kurze Schenkel als dickeres Gehäuseteil (4) das Kassetten-Tonbandgerät (2) beinhaltet.

4. Lautsprech-Telefongerät nach den Ansprüchen 1 bis 3, d a d u r c h   g e k e n n z e i c h n e t , daß auf der oberen Schmalseite (5) des dickeren Gehäuseteils (4) (kurzer Gehäuseschenkel) die Bedienelemente (6), vorzugsweise für das Kassetten-Tonbandgerät angeordnet sind.

5. Lautsprech-Telefongerät nach den Ansprüchen 1 bis 4, d a d u r c h   g e k e n n z e i c h n e t , daß die Bedienelemente (6) in der oberen Schmalseite (5) des dickeren Gehäuseteils (4) (kurzer Gehäuseschenkel) als streifenförmiges Drucktastenaggregat ausgebildet sind.

6. Lautsprech-Telefongerät nach den Ansprüchen 1 bis 5, d a d u r c h   g e k e n n z e i c h n e t , daß im längeren flachen Gehäuseteil (3) ein schubladenartig ausgebildetes Schiebeteil (8) eingesetzt ist, das aus der flachen vorderen Stirnseite (9) oder aus einer der beiden flachen Längsseiten herausziehbar ist und vorzugsweise ein Telefonverzeichnis beinhaltet.

7. Lautsprech-Telefongerät nach den Ansprüchen 1 bis 6, d a d u r c h   g e k e n n z e i c h n e t , daß die Tonband-Kassette in das Kassettengerät über eine der drei Schmalseiten des dickeren Gehäuseteils (4) (kurzer Gehäuseschenkel) mittels vorgesehener Einführungsschlitze einsteckbar oder über eine an der äußeren Wandfläche des dickeren Gehäuseteils (4) angebrachte die Kassette aufnehmende Klappe (7) einschwenkbar ist.

8. Lautsprech-Telefongerät nach den Ansprüchen 1 bis 7, d a d u r c h   g e k e n n z e i c h n e t , daß das Magnetband-Aufnahme-Wiedergabegerät über einen sprachgesteuerten Schalter angesteuert wird.

9. Lautsprech-Telefongerät nach den Ansprüchen 1 bis 8, d a d u r c h   g e k e n n z e i c h n e t , daß eine Einrichtung im Magnetband-Aufnahme-Wiedergabegerät vorgesehen ist, die durch Drücken einer Rückstelltaste das Tonbandgerät zum Ausgang des zuletzt aufgezeichneten Gesprächs zurückspult und erneut auf Aufnahme schaltet.

- 4 -                    Beschreibung:

0091513
Reg. 1869

FIG.1

FIG.2

# FIG. 3